# EUROPÄISCHE PATENTSCHRIFT

(11) **EP 1 745 405 B1**
(45) Veröffentlichungstag und Bekanntmachung des Hinweises auf die Patenterteilung: **08.07.2015**
(21) Anmeldenummer: 05742388.1
(22) Anmeldetag: 14.04.2005
(51) Int. Cl.: G06K 7/00

(54) **SENDESCHALTUNG FÜR EIN TRANSPONDERSYSTEM ZUR ÜBERTRAGUNG EINES DIGITALEN SIGNALS ÜBER EINE SENDEANTENNE**
TRANSMISSION CIRCUIT FOR A TRANSPONDER SYSTEM USED FOR TRANSMITTING A DIGITAL SIGNAL VIA A TRANSMIT ANTENNA
CIRCUIT D'EMISSION POUR SYSTEME DE TRANSPONDEUR PERMETTANT DE TRANSMETTRE UN SIGNAL NUMERIQUE PAR L'INTERMEDIAIRE D'UNE ANTENNE D'EMISSION

(30) Priorität: 08.05.2004 DE 102004022839
(43) Veröffentlichungstag der Anmeldung: 24.01.2007
(73) Patentinhaber: Conti Temic Microelectronic GmbH, 90411 Nürnberg (DE)
(72) Erfinder: TENCONI, Bernard, 78532 Tuttlingen (DE)
(74) Vertreter: Bonn, Roman Klemens
(86) Internationale Anmeldenummer: PCT/DE2005/000680
(87) Internationale Veröffentlichungsnummer: WO 2005/111911

(56) Entgegenhaltungen:
- WO-A-01/69776
- DE-A1- 19 839 802

## Beschreibung

Die Erfindung betrifft eine Sendeschaltung für ein Transpondersystem gemäß dem Oberbegriff des Anspruchs 1.

Transpondersysteme werden zur Übertragung eines digitalen Signals, beispielsweise eines Identifikationscodes für die Zugangskontrolle zu einem Kraftfahrzeug oder vergleichbaren Daten eingesetzt. Zur Datenübertragung werden Funkwellen mit einer vorgegebenen Trägerfrequenz verwendet, wobei die erforderliche Reichweite recht gering ist und die Sendeschaltung aus Kostengründen für den Masseneinsatz sehr preiswert sein muß. Zudem ist die Einhaltung entsprechender Auflagen hinsichtlich der Sendeleistung, Bandbreite und Oberwellendämpfung für eine amtliche Funkzulassung erforderlich.

Bisher wurden daher zur Anregung der Sendeantenne von Transpondersystemen in der Regel Halbleitertransistoren im Klasse-A-Betrieb mit begrenzten Anstiegsflanken, also nicht im Schaltbetrieb eingesetzt, da der Schaltbetrieb zu erheblichen Oberwellenstörungen führt. Zudem musste bisher die Betriebsspannung relativ konstant gehalten werden, was insbesondere in Kfz-Anwendungen problematisch ist, zumal in Zukunft Fahrzeughersteller zum Teil abweichende Bordnetzspannungen benutzen werden.

Aus DE 198 39 802 A1 ist ein Verfahren und eine Vorrichtung zum Erzeugen eines amplitudenmodulierten Trägersignals bekannt. Hierbei wird das amplitudenmodulierte Trägersignals durch Filterung eines digitalen, pulsweitenmodulierten Signals erzeugt.

So werden Halbleiterschalter im Schaltbetrieb zur Anregung der Sendeantenne eingesetzt und pulsweitenmoduliert im PWM-Betrieb geschaltet, wodurch die Schaltung gegenüber herkömmlichen Schaltungen für Transponder deutlich weniger Verlustleistung aufweist und andererseits über einen relativ großen Spannungsbereich eingesetzt werden kann. Das Puls-Pausen-Verhältnis bestimmt dabei den Strom durch die Sendeantenne und damit die Sendeleistung. Zur Eliminierung der Oberwellenstörungen wird der Sendeantenne ein Bandpaßvorfilter vorgeschaltet.

Der Strom wird durch die Sendeantenne erfasst, mit einem Sollwert verglichen und das Puls-Pausen-Verhältnis so geregelt, dass der Strom dem Sollwert entspricht. Selbst Schwankungen in der Spannungsversorgung, wie sie bei Kfz-Anwendungen nicht auszuschließen sind, sowie Temperatureinflüsse können dadurch ausgeglichen werden.

Aufgabe der Erfindung ist es, eine Sendeschaltung vorzustellen, wobei das Problem das während des Aussendens des aufgelagerten digitalen Signals der Strom durch die Sendeantenne jedoch gerade schwankt, gelöst wird. Diese Aufgabe wird durch die Merkmale im kennzeichnenden Teil des Anspruchs 1 gelöst. Es erweist sich als besonders vorteilhaft, die Regelung für die Sendezeitdauer auszusetzen und das Puls-Pausen-Verhältnis konstant zu halten. Es wird daher vor dem Senden für eine vorgegebene Testzeitdauer eine Testfolge des PWM-Signals aktiviert, so dass sich der Regelkreis einstellen kann.

Die Übertragung der digitalen Signale erfolgt dabei innerhalb von vorgegebenen Sendezeitdauern, zwischen denen jeweils eine Testfolge gesendet und der Regelkreis wieder nachgeregelt wird.

Die neben dem Puls-Pausen-Verhältnis im PWM-Signalerzeuger wird auch die Regelung selbst für die Sendezeitdauer auf den eingestellten Wert gehalten und von der Erfassung des Stroms abgetrennt, damit auch innerhalb des Regelkreises der eingestellte Wert für die Sendezeitdauer gehalten und somit bei Ende der Sendezeitdauer und Aktivierung der Testfolge und der Regelung als Vorgabewert verfügbar ist. Dadurch wird die Einschwingzeit deutlich reduziert.

Um auch beim Einschalten dieses Einschwingen abzukürzen, wird der Regelkreis auch dann vorzugsweise auf einen Vorgabewert voreingestellt.

Die Erfindung wird nachfolgend anhand von Ausführungsbeispielen und Figuren näher erläutert. Kurze Beschreibung der Figuren:
Fig.1 Funktionsschaltbild der Sendeschaltung
Fig.2 funktionales Schaltbild der Regelung
Fig.3 Ablaufdiagramm der PWM-Regelung
Fig. 4 Ersatzschaltung zur Simulation von Vorfilter und Sendeantenne

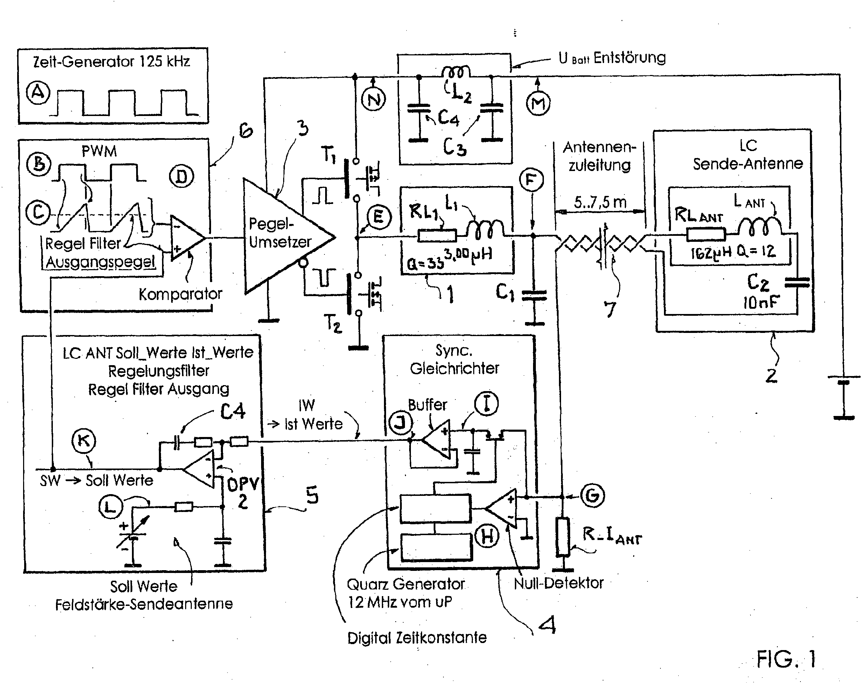

Die Figur 1 zeigt in einem Funktionsschaltbild eine Senderschaltung eines Transpondersystems zur Übertragung eines digitalen Signals, hier eines Identifikationscodes für die Zugangskontrolle zu einem Kraftfahrzeug.

Für eine einfache und energiesparende Ansteuerung wird ein PWM-Ansteuersignal vom PWM-Glied 6 an eine Gegentaktschaltstufe 3 erzeugt. Um dennoch ein Sendesignal ohne störende Oberwellen zu erzeugen, wird für die Antenne 2 ein Vorfilter 1 verwendet. Mit diesem Doppelkreisfilter kann erreicht werden, dass schon die dritte Oberwelle beim ersten Kreis 1 (Position F) um 45 dB abgeschwächt wird. So ist die Verbindung 7 vom Steuergerät zur Sendeantenne nicht mit unnötigen Oberwellen belastet.

Der zweite Kreis 2 besteht aus der Induktivität LAnt und der Kapazität CAnt. Dieser Serienresonanzkreis ist hier bspw. auf die Resonanzfrequenz f0 = 125 kHz abgestimmt. LAnt besteht bspw. aus einem Ferritstab, welcher ein magnetisches Sendefeld ausstrahlt.

Es ist zu vermerken, dass sowohl theoretische wie auch praktische Ergebnisse ein Abschwächung der dritten Oberwelle durch den Sendeantennenkreis (Strom wie auch Spannung) über 65 dB ergeben. Somit werden alle notwendigen Bestimmungen zur Funkzulassung eingehalten.

Der Doppel-Bandpassfilter besteht aus einem Vorkreis 1 mit L1, C1 und aus einem zweiten Filterkreis 2 aus LAnt, C2. Der Komplex LAnt - C2 ist mit dem Steuergerät über die Antennenzuleitung 7 mit einem Abstand von bspw. 5 - 7,5 m verbunden. Dieser Doppel-PI-Bandpassfilter wird mit einem Rechtecksignal am Messpunkt E über das CMOS-Transistorpaar T1 und T2 getrieben. Die Transistoren T1 und T2 werden als Schalter verwendet und werden wiederum über einer Pegelumsetzer gesteuert.

Am Messpunkt G entsteht eine AC-Spannung über dem Serienwiderstand R_IAnt. Sie ist die Abbildung des Stromes der über die Sendeantenne (LAnt) fließt. Über einen Synchrongleichrichter wird diese Spannung als Spitzen-DC-Wert gleichgerichtet. Die DC-Spannung ist am Messpunkt J vorhanden und gelangt zu einem Regelungsfilter.

Das Regelverhalten des Stromes in der Sendeantenne (LAnt) ist dann wie folgt:
Ein Zeitbasisgenerator generiert ein periodisches 125-kHz-Rechteck-Digitalsignal (Signal B). Über dieses Signal B wird wiederum über die positive Flanke eine Rampe (Signal C) hergestellt und an den invertierten Eingang eines Komparators übergeben. Der nicht-invertierte Eingang dieses Komparators bekommt vom Regelungsfilter eine von der Amplitude des LAnt -Stromes abhängige Spannung übermittelt.

Der Sollwert des Antennenstromes bzw. die Feldstärke (VA) ist über den Messpunkt L vorgegeben. Ein Operationsverstärker dient als Regelungsfilter. Bei der Annahme, dass der Antennenstrom steigt, wird die AC-Spannung am Messpunkt G ebenso steigen. Somit wird die DC-Spannung am Messpunkt J proportional auch größer werden. Dadurch bekommt der invertierte Eingang des OPV2 eine positivere Spannung als der Spannungssollwert L am nicht-invertierten Eingang zu sehen.

Diese Spannungsdifferenz wird über R1 und C4 integriert. Somit sinkt die Ausgangsspannung des Regelungsfilters am Messpunkt K. Die Spannung des Messpunkt K gelangt an den nicht-invertierten Eingang des Rampenkomparators, und der Rampenpegel an Messpunkt C sinkt. Somit ist am Messpunkt D das Pulsbreitenverhältnis zu der Wiederholungsperiode (8 µs = 125 kHz) schmäler.

Dadurch wird Punkt E über den Pegelumsetzer und die Schalter T1 und T2 den gleichen Spannungswert annehmen. Da der positive Impuls schmäler geworden ist, ist die Energie am Doppel-PI-Bandpassfilter weniger geworden. Das hat zur Folge, dass die Spannung am Messpunkt G (Abbildung des Stromes durch die Sendeantenne) geringer geworden ist. Wie oben genannt verringert sich daraufhin auch die DC-Spannung an Messpunkt J. Die Differenz zwischen IW (Istwert) und SW (Sollwert) wird verkleinert, so dass über Messpunkt K bzw. Messpunkt D auf den richtigen Wert geregelt wird.

Die Präzision des Stromes durch die Sendeantenne bzw. die Feldstärke ist letztendlich abhängig vom Offset des OPV1 und OPV2 und der Genauigkeit des DC-Spannungstemperaturkoeffizienten und der absoluten Sollwertgenauigkeit.

Die Regelvorrichtung ermöglicht eine Präzision des Antennenstromes bzw. der Feldstärke von ca. 0,5 %.

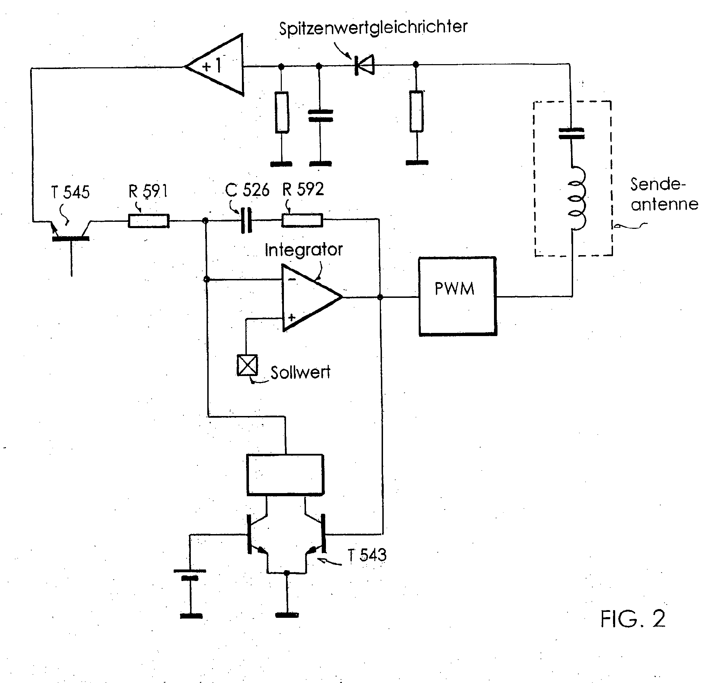

Nachfolgend soll anhand der Schaltungsanordnung gemäß Figur 2 der Regelfilter näher beschrieben werden.

Über einen Spitzenwertgleichrichter (Diode) wird der Strom durch den Bandpassfilter ermittelt. Die gewonnene Spannung ist proportional zum Sendeantennenstrom und positiv. Diese Spannung gelangt durch T545 und R591 an den invertierenden Eingang des OPV 21, der als Integrationsfilter beschaltet ist.

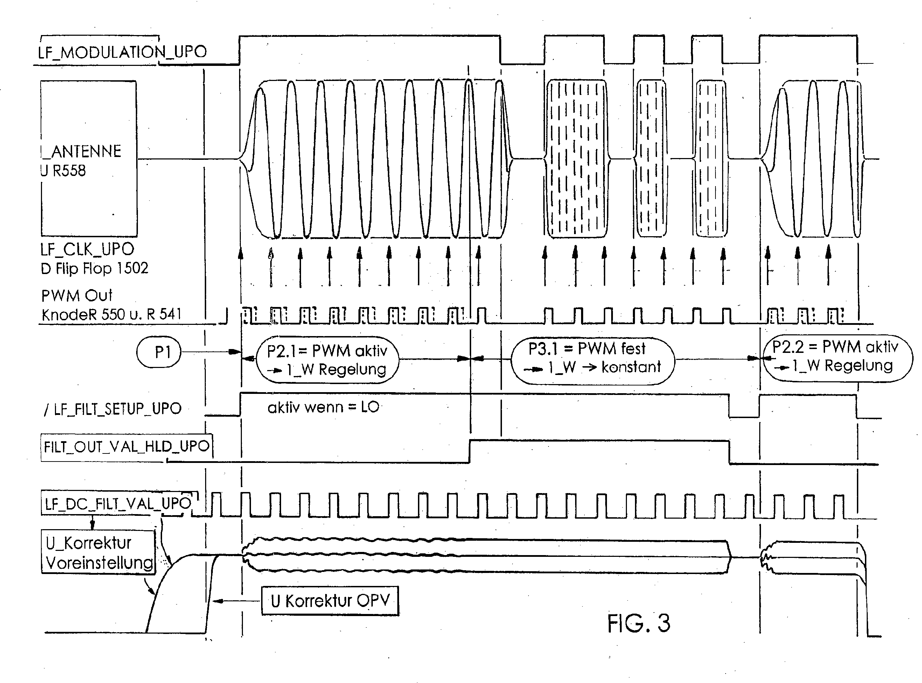

Je größer der Strom durch den Filter (bzw. Sendenantenne), desto mehr sinkt die Spannung am Ausgang des Integrators 21. Somit lädt sich C526 entsprechend auf. Diese Spannung, als "U_Korrektur" benannt, ist der Eingang zur PWM. Die Pulsbreite am Ausgang der PWM wird um so schmäler, je größer der Informationssprung über dem Spitzenwertgleichrichter gewonnen wird. Die Regelung (Phase P2 in Fig. 3) findet statt, indem sich am Eingang des Integrators der Sollwert und die Istwertspannung soweit annähern, dass durch R591 nahezu kein Strom mehr fließt. Somit nähert sich der DC-Istwert den Sollwert an. Die Genauigkeit des Istwerts ist lediglich von der Offsetspannung des Integrators abhängig.

Nun soll anhand des Ablaufdiagramms gemäß Figur 3 der Ablauf der Regelung näher beschrieben werden.

Damit sich bei einem Neustart oder einem undefinierten Betriebszustand bspw. nach einer gewissen Sendezeit der Istwert U_korrektur so schnell wie möglich auf die Führungsgröße einstellt, wird während der Phase P1 der Integrationsfilter (21 in Fig. 2) auf einen groben Wert U0 (vgl. Fig.2) voreingestellt. Dies erfolgt mittels des Signals LF_DC_FILT VAL_UPO (vgl. Fig.3) so lange, bis LF_FILT_SETUP_UPO = LOW.

Zum Verlassen der Voreinstellung und der Aktivierung der PWM wird nach der Freigabe durch das Signal LF_MODULATION_UPO und LF_FILT_SETUP_UPO = HIGH der Transistor T545 (vgl. Fig. 2) durchgeschaltet (FILT_OUT_VAL_HLD_UPO = LOW). d.h. das Regelverhalten in Phase P2 wird wie oben aktiv.

Es wird also in Phase P2.1 das Trägersignal unmoduliert gesendet (PWM out) und der Strom durch die Antenne (I_Antenne) erfasst und nachgeregelt, wie anhand der Schwankungen an U_Korrektur erkennbar ist. Die. Schwankungen von I_Antenne sind in der Fig. 3 kaum erkennbar, aber in der Praxis vorhanden.

Da sich während der vorgegebenen Dauer dieser U_Korrektur in aller Regel auf den richtigen Wert einstellt, wird T545 hochohmig. Dadurch behält U_Korrektur seinen vorher eingestellten Wert bei, da C526 seine Ladung behält, wenn weder ein Strom über R591 noch über den Eingangswiderstand des OPV fließt.

In der anschließenden Sendephase P3.1 wird der Schalter T545 ausgeschaltet (Signal FILT_OUT_VAL_HLD_UPO = HIGH in Fig. 3) und damit das PWM-Verhältnis festgehalten, bis dass der Datenübertragungszyklus abgeschlossen ist.

Ab diesem Zeitpunkt können Datenbits über 100 % Modulation des Trägers übertragen werden. Da ein Ein- bzw. Ausschalten des Trägers weit über der Zeitkonstante des Trägers liegt (t = R591 *C526) wird durch die vorherigen Maßnahmen und eine entsprechend bemessene Dauer eines Datenübertragungszyklus vermieden, dass eine Schwebung von U_Korrektur und damit der Trägeramplitude stattfindet.

Nach der vorgegebenen Dauer P3 eines Datenübertragungszyklus wird der Regelkreis wieder freigegeben, also eine neue Testphase P2 aktiviert, d.h. Schalter T545 geschlossen und für eine vorgegebene Dauer das unmodulierte Trägersignal ausgesendet und dabei der Sendestrom I_Antenne auf den Sollwert eingeregelt, bevor sich dann wieder die nächste Sendephase P3.2 anschließt usw.

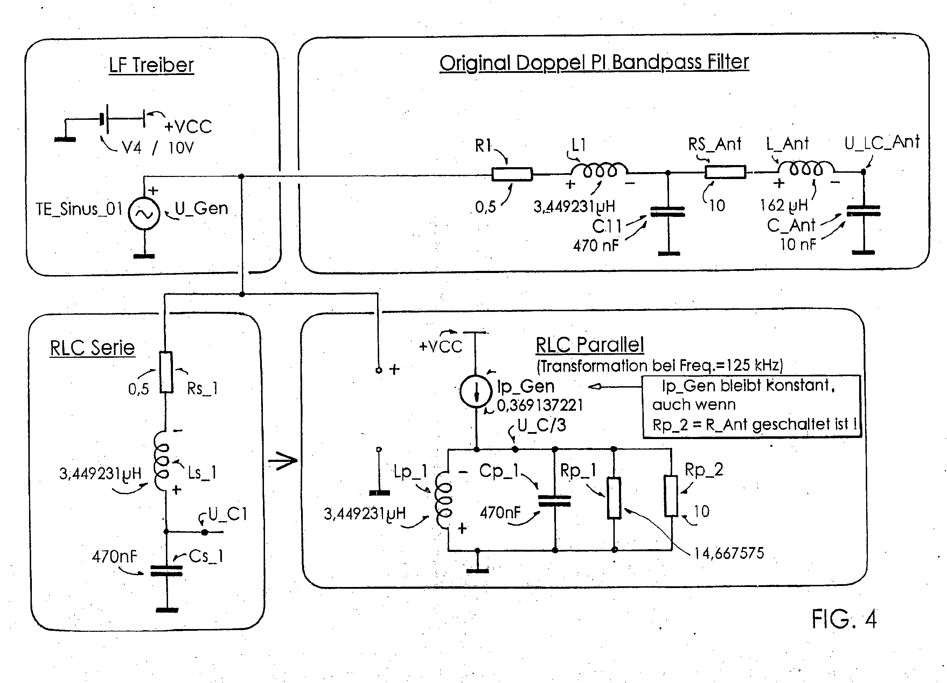

Zur Bestimmung der Vorfilterparameter durch Simulation des Verhaltens von Vorfilter und Sendeantenne wurde zudem die Schaltung für die hier gewählte Trägerfrequenz von 125 kHz in eine RLC-Parallelschaltung transformiert, wie dies in Fig. 4 gezeigt wird. Die Größe der Ersatzschaltglieder ergibt sich dabei aus den Ausgangswerten entsprechend der dort dargestellten Formeln.

Um die Sendeschaltung über einen weiten Bereich von Betriebsspannungen verlustarm zu betreiben, wird ein PWM-Signalerzeuger zur Erzeugung eines pulsweitenmodulierten Signals vorgegebener Taktfrequenz vorgesehen, wobei die Taktfrequenz des PWM-(Grund)-Signals größer, vorzugsweise ein Vielfaches der Frequenz des digitalen Signals ist. Zur Übertragung des digitalen Signals wird das digitale Signal dem PWM-Signal überlagert, d.h. es erfolgt eine entsprechend niederfrequentere Amplitudenmodulation auf dem PWM-Grundsignal. Das PWM-Signal steuert Halbleiterschalter im Schaltbetrieb, wobei der Sendeantenne der Bandpassvorfilter vorgeschaltet ist.

## Patentansprüche

1. Sendeschaltung für ein Transpondersystem zur Übertragung eines digitalen Signals über eine Sendeantenne (2) für Funkwellen mit einer vorgegebenen Trägerfrequenz, wobei
a) ein PWM-Signalerzeuger (6) zur Gewinnung eines pulsweitenmodulierten Signals vorgegebener Taktfrequenz vorgesehen ist und zur Übertragung des digitalen Signals das digitale Signal dem PWM-Signal überlagert wird,
b) das so erzeugte Signal über einen Pegelumsetzer (3) zwei Halbleiterschalter (T1,T2) im Gegentaktschaltbetrieb ansteuert, wobei ein Halbleiterschalter (T1) mit der Versorgungsspannung und der andere Halbleiterschalter (T2) mit dem Massepotential sowie beide Halbleiterschalter (T1,T2) mit dem jeweils anderen Anschluß mit dem Eingang eines Bandpaßvorfilters (1) verbunden sind,
c) am Ausgang des Bandpaßvorfilters (1) die Sendeantenne (2) geschaltet ist,
d) ein Regelkreis für den Strom (I_Ant) durch die Sendeantenne (2) vorgesehen ist,
e) wobei der Strom durch die Sendeantenne erfasst (R_I_Ant) und in einem Vergleicher mit einem Sollwert (I) verglichen wird, und bei einer Abweichung (J)
f) der Regelkreis ein Steuersignal (K) zur Anpassung des Puls-Pausen-Verhältnisses (D) des PWM-Signals an den PWM-Signalerzeuger erzeugt,
**dadurch gekennzeichnet, dass**
g) vor der Übertragung des digitalen Signals für eine vorgegebene Testzeitdauer (P2) eine Testfolge des PWM-Signals ausgesende wird und dabei der Strom durch die Sendeantenne erfasst wird und das Puls-Pausen-Verhältnis des PWM-Signals so geregelt wird, dass der Strom annähernd dem Sollwert entspricht, und
h) nachfolgend für eine vorgegebene Sendezeitdauer (P3) das digitale Signal gesendet und dabei das Puls-Pausen-Verhältnis konstant gehalten wird.

2. Sendeschaltung nach Anspruch 1,
**dadurch gekennzeichnet,**
**dass** der Strom mittels einer Spitzenwertgleichrichterschaltung erfasst und einem Integrationsfilter (21) mit Schwellwertvergleicher zugeführt wird, wobei das Ausgangssignal dieses Schwellwertvergleichers das Puls-Pausen-Verhältnis des PWM-Signalerzeugers steuert.

3. Sendeschaltung nach Anspruch 2,
**dadurch gekennzeichnet, dass**
zwischen Spitzenwertgleichrichterschaltung erfasst und Integrationsfilter ein steuerbares Schaltmittel (T545) vorgesehen und dieses während der Sendezeitdauer geöffnet und dabei der zuletzt eingestellte Wert zumindest näherungsweise gehalten wird.

4. Sendeschaltung nach Anspruch 1,
**dadurch gekennzeichnet, dass**
der Integrationsfilter (21) mit Schwellwertvergleicher einen Operationsverstärker mit einen Kondensator (C526) und einem Widerstand (R592) im Rückkoppelpfad vom Ausgang auf den invertierenden Eingang aufweist, wobei die Zeitkonstante des Integrationsfilters größer ist als die Sendezeitdauer.

5. Sendeschaltung nach Anspruch 1,
**dadurch gekennzeichnet, dass**
bei Inbetriebnahme (P1) der Integrationsfilter unmittelbar auf einen vorgegebenen Wert voreingestellt wird und nachfolgend die Aussendung der Testfolge (P2) aktiviert wird.

6. Verwendung einer Sendeschaltung nach einem der vorangehenden Ansprüche für einen Transponder zur drahtlosen Datenübertragung zwischen einem Zentralgerät im Kraftfahrzeug und einem tragbaren Identifikationsgeber.

## Claims

1. Transmission circuit for a transponder system for transmitting a digital signal via a transmission antenna (2) for radio waves at a prescribed carrier frequency, wherein
a) a PWM signal generator (6) for obtaining a pulse-width-modulated signal at a prescribed clock frequency is provided and, in order to transmit the digital signal, the digital signal is overlaid on the PWM signal,
b) the signal produced in this manner actuates two semiconductor switches (Tl, T2) in push-pull mode via a level converter (3), wherein one semiconductor switch (T1) is connected to the supply voltage and the other semiconductor switch (T2) is connected to the earth potential and both semiconductor switches (Tl, T2) have the respective other connection connected to the input of a bandpass input filter (1),
c) the output of the bandpass input filter (1) has the transmission antenna (2) connected to it,
d) a control loop for the current (I_Ant) through the transmission antenna (2) is provided,
e) wherein the current through the transmission antenna is recorded (R_I_Ant) and is compared with a setpoint value (I) in a comparator, and in the event of a discrepancy (J)
f) the control loop produces a control signal (K) for matching the pulse/pause ratio (D) of the PWM signal to the PWM signal generator,
**characterized in that**
g) prior to the transmission of the digital signal a test sequence for the PMW signal is transmitted for a prescribed test period (P2) and in the course of this the current through the transmission antenna is recorded and the pulse/pause ratio of the PWM signal is regulated such that the current approximately corresponds to the setpoint value, and
h) subsequently the digital signal is sent for a prescribed transmission period (P3) and in the course of this the pulse/pause ratio is kept constant.

2. Transmission circuit according to Claim 1,
**characterized**
**in that** the current is recorded by means of a peak value rectifier circuit and is supplied to an integration filter (21) with a threshold value comparator, wherein the output signal from this threshold value comparator controls the pulse/pause ratio of the PWM signal generator.

3. Transmission circuit according to Claim 2,
**characterized in that**
the peak value rectifier circuit and the integration filter have a controllable switching means (T545) provided between them and said switching means is opened during the transmission period and in the course of this the most recently set value is at least approximately held.

4. Transmission circuit according to Claim 1,
**characterized in that**
the integration filter (21) with a threshold value comparator has an operational amplifier with a capacitor (C526) and a resistor (R592) in the feedback path from the output to the inverting input, wherein the time constant of the integration filter is greater than the transmission period.

5. Transmission circuit according to Claim 1,
**characterized in that**
upon startup (P1) the integration filter is immediately preset to a prescribed value and subsequently the transmission of the test sequence (P2) is activated.

6. Use of a transmission circuit according to one of the preceding claims for a transponder for wireless data transmission between a central unit in the motor vehicle and a portable identification transmitter.

## Revendications

1. Circuit émetteur pour un système de transpondeur permettant de transmettre un signal numérique via une antenne émettrice (2) pour ondes radio avec une fréquence porteuse prédéfinie, dans lequel
a) il est prévu un générateur de signaux MLI (6) pour obtenir un signal avec modulation de largeur d'impulsion d'une fréquence de synchronisation prédéfinie, et le signal numérique est superposé au signal MLI pour la transmission du signal numérique,
b) le signal ainsi généré active, par l'intermédiaire d'un convertisseur de niveau (3), deux circuits de semi-conducteurs (T1, T2) dans un mode de commutation en synchronisation inverse, un circuit de semi-conducteurs (T1) étant relié à la tension d'alimentation et l'autre circuit de semi-conducteurs (T2) étant relié au potentiel de masse, et les deux circuits de semi-conducteurs (T1, T2) étant reliés par l'autre borne respectivement à l'entrée d'un préfiltre passe bande (1),
c) l'antenne émettrice (2) est connectée à la sortie du préfiltre passe bande (1),
d) il est prévu un circuit de réglage pour le courant (I Ant) passant par l'antenne émettrice (2),
e) le courant passant par l'antenne émettrice est détecté (R_I_Ant) et est comparé à une valeur de consigne (I) dans un comparateur, et en cas de divergence (J),
f) le circuit de réglage génère un signal de commande (K) pour ajuster l'intervalle d'impulsions (D) du signal MLI au générateur de signaux MLI,
**caractérisé en ce que**
g) avant la transmission du signal numérique, une suite de tests du signal MLI est émise pour une durée de test (P2) prédéfinie, et, à cette occasion, le courant passant par l'antenne émettrice est détecté et l'intervalle d'impulsions (D) du signal MLI est réglé de telle sorte que le courant correspond à peu près à la valeur de consigne, et
h) ensuite, le signal numérique est émis pour une durée d'émission (P3) prédéfinie, et l'intervalle d'impulsions est maintenu constant.

2. Circuit émetteur selon la revendication 1, **caractérisé en ce que** le courant est détecté au moyen d'un détecteur de crête et est acheminé vers un filtre intégrateur (21) avec comparateur de valeurs seuils, le signal de sortie de ce comparateur de valeurs seuils commandant l'intervalle d'impulsions du générateur de signaux MLI.

3. Circuit émetteur selon la revendication 2, **caractérisé en ce qu'**entre le détecteur de crête et le filtre intégrateur est prévu un moyen de commutation (T545) pouvant être ouvert, ce dernier pouvant être amené en position ouverte pendant la durée d'émission et, à cette occasion, la valeur réglée en dernier étant maintenue au moins approximativement.

4. Circuit émetteur selon la revendication 1, **caractérisé en ce que** le filtre intégrateur (21) avec comparateur de valeurs seuils comporte un amplificateur opérationnel avec un condensateur (C526) et une résistance (R592) dans le trajet de retour depuis la sortie vers l'entrée inversée, la constante de temps du filtre intégrateur étant supérieure à la durée d'émission.

5. Circuit émetteur selon la revendication 1, **caractérisé en ce qu'**au moment de la mise en service (PI), le filtre intégrateur est directement préréglé à une valeur prédéfinie et l'émission de la suite de tests (P2) est activée ensuite.

6. Utilisation d'un circuit émetteur selon l'une des revendications précédentes, pour un transpondeur permettant la transmission sans fil de données entre un dispositif central dans le véhicule automobile et un transmetteur d'identification portable.
